# EUROPEAN PATENT APPLICATION

(11) **EP 1 722 269 A1**
(43) Date of publication of application: **15.11.2006**
(21) Application number: 06009183.2
(22) Date of filing: 04.05.2006
(51) Int. Cl.: G03B 17/00, G03B 17/55, G03B 3/04

(54) **Pickup device driving apparatus and photographing device using the same**

(30) Priority: 13.05.2005 JP 2005140930
(71) Applicant: MATSUSHITA ELECTRIC INDUSTRIAL CO., LTD., Osaka 571-8501 (JP)
(72) Inventor: Takahashi, Masami Matsushita Electric Ind. Co. Ltd, Chuo-ku, Osaka-shi, Osaka 540-6319 (JP); Wada, Jouji Matsushita Electric Ind. Co. Ltd, Chuo-ku, Osaka-shi, Osaka 540-6319 (JP)
(74) Representative: Pautex Schneider, Nicole Véronique

(57) **Abstract**

A pickup device driving apparatus (70) includes a movable part (7) having a pickup device (15) and capable of moving the pickup device while a direction of a pickup surface is held, and a heat radiation part (120) which is provided in the movable part and allows heat in the vicinity of the pickup device to escape by radiation. Thus, it is possible to allow heat to escape without generating a frictional force when the pickup device is moved.

## Description

### Technical Field

The present invention relates to a photographing apparatus, such as a monitoring camera apparatus or a video camera apparatus, and more particularly, to a pickup device driving apparatus for moving a pickup device in an optical axial direction and a photographing apparatus using the same.

### Background Art

Conventionally, in order to perform flange focus adjustment or focus adjustment, a photographing apparatus for automatically moving a pickup device in an optical axial direction of a lens to obtain a clear image is suggested (for example, Japanese Patent Unexamined Publication No. 2003-274229).

In such a photographing apparatus, heat generated in the vicinity of the pickup device or a driver circuit may have a bad influence on characteristics of the pickup device or components.

In order to solve such a problem, a structure of providing an elastically deformable heat transfer plate such as heat transfer rubber in the vicinity of a pickup device to bring the heat transfer plate into contact with a case in an elastically deformed state such that heat is transferred to the case to radiate the heat is suggested (for example, Japanese Patent Unexamined Publication No. 2001-326840).

According to such a structure, since the heat transfer plate is in contact with the case even when the pickup device is moved in an optical axial direction, it was possible to transfer the heat to the case.

However, in the above-described photographing apparatus, the pickup device is moved in the optical axial direction in a state that the heat transfer plate provided in the vicinity of the photographing device is in contact with the inside of the case. Accordingly, when the pickup device is moved in the optical axial direction, a frictional force is generated between the heat transfer plate and the case. Due to the frictional force, the pickup device need be moved by a larger force. Accordingly, it is difficult to miniaturize a driving motor and to move the pickup device by a small distance.

### Disclosure of the Invention

The present invention has been made in view of the above problem and provides a pickup device driving apparatus which is capable of allowing heat in the vicinity of the pickup device to escape without generating a frictional force even when a pickup device is moved in an optical axial direction, and a photographing apparatus using the same.

According to an aspect of the present invention, there is provided a pickup device driving apparatus including a movable part having a pickup device and capable of moving the pickup device while a direction of a pickup surface is held; and a heat radiation part which is provided in the movable part and allows heat in the vicinity of the pickup device to escape by radiation.

According to this configuration, since it is possible to allow heat in the vicinity of the pickup device to escape by radiation of the heat radiation part, it is possible to allow heat in the vicinity of the pickup device to escape without generating a frictional force even when a pickup device is moved in an optical axial direction.

The heat radiation part may be provided to face a heat sink part provided in a case.

According to this configuration, it is possible to allow heat to escape by radiation from the heat radiation part of the pickup device driving apparatus to the heat sink part provided in the case.

The heat radiation part may be provided on the surface of the movable part.

According to this configuration, it is possible to perform natural convection cooling by rapid radiation.

Convex parts may be provided on a surface of the heat radiation part facing the heat sink part.

According to this configuration, since a heat radiation area increases, it is possible to increase radiation efficiency.

The convex parts of the heat radiation part may be provided to face concave parts of irregularities provided in the heat sink part.

According to this configuration, since a facing area between the heat radiation part and the heat sink part increases, it is possible to increase radiation efficiency.

The convex parts of the heat radiation part may have fin which extend in a movement direction of the pickup device.

According to this configuration, although the pickup device is moved, the heat radiation part is hard to come in contact with the heat sink part and thus radiation efficiency can increase.

The heat radiation part may not be in contact with the heat sink part within a movement range of the pickup device.

According to this configuration, although the pickup device is moved, a frictional force is hard to be generated.

According to another aspect of the present invention, there is provided a photographing apparatus including a lens part; a case; the pickup device driving apparatus of the present invention; and an image signal processing part which performs an image signal process on a signal output from the pickup device of the pickup device driving apparatus.

According to this configuration, since it is possible to allow heat in the vicinity of the pickup device to escape by radiation of the heat radiation part, it is possible to allow heat in the vicinity of the pickup device to escape without generating a frictional force even when a pickup device is moved in an optical axial direction.

A cooling part which cools the heat sink part may be further included.

According to this configuration, it is possible to increase heat sink efficiency.

The cooling part may be a fan motor.

According to this configuration, it is possible to increase heat sink efficiency by a simple configuration.

According to another aspect of the present invention, there is provided a monitoring camera apparatus including the photographing apparatus of the present invention; an illumination-intensity change detecting part which detects change in illumination intensity; a filter part which attaches and detaches an infrared cut filter on an optical axis of the lens part depending on the change in illumination intensity detected by the illumination-intensity change detecting part; and a control part which drives the movable part of the pickup device driving apparatus when the infrared cut filter of the filter part is attached and detached.

According to this configuration, since the pickup device can be moved in the optical axial direction of the lens part in a state that the pickup surface is perpendicular to the optical axial direction of the lens part when the infrared cut filter is attached and detached, displacement in a optical path length can be corrected when the infrared cut filter is attached and detached. Accordingly, it is possible to provide a monitoring camera apparatus capable of performing photographing with high precision day and night. Since it is possible to allow heat in the vicinity of the pickup device to escape by radiation of the heat radiation part, it is possible to allow heat in the vicinity of the pickup device to escape without generating a frictional force even when a pickup device is moved in an optical axial direction.

As described above, according to the present invention, it is possible to provide a pickup device driving apparatus which is capable of allowing heat in the vicinity of the pickup device to escape without generating a frictional force even when a pickup device is moved in an optical axial direction, and a photographing apparatus using the same.

### Brief Description of the Drawings

Fig. 1 is an exploded perspective view showing a configuration of photographing apparatus 1 according to an embodiment of the present invention;
Fig. 2 shows a positional relationship among a base attaching part, a pickup device driving apparatus, and a heat sink part when the photographing apparatus according to the embodiment of the present invention is used;
Fig. 3 is a cross-sectional view showing the positional relationship among the base attaching part, the pickup device driving apparatus, and the heat sink part in the photographing apparatus according to the embodiment of the present invention;
Fig. 4 shows a relationship between a heat radiation part and a heat sink part in the photographing apparatus according to the embodiment of the present invention;
Fig. 5 is a perspective view of a configuration of a pickup device driving apparatus according an embodiment of the present invention;
Fig. 6 is a side view of the configuration of the pickup device driving apparatus according to the embodiment of the present invention;
Fig. 7 is an exploded perspective view of the pickup device driving apparatus according to the embodiment of the present invention when viewed from the opposite side of a lens part;
Fig. 8A is a plan view showing a configuration of a driving part in the pickup device driving apparatus according to the embodiment of the present invention;
Fig. 8B is a plan view showing a configuration of the driving part in the pickup device driving apparatus according to the embodiment of the present invention;
Fig. 9A is a view explaining an operation of the pickup device driving apparatus according to the embodiment of the present invention;
Fig. 9B is a view explaining the operation of the pickup device driving apparatus according to the embodiment of the present invention;
Fig. 10A is a view explaining a balance member mounted on the pickup device driving apparatus of the photographing apparatus according to the embodiment of the present invention;
Fig. 10B is a view explaining the balance member mounted on the pickup device driving apparatus of the photographing apparatus according to the embodiment of the present invention;
Fig. 11A shows a pickup device driving apparatus and a photographing apparatus according to another embodiment of the present invention; and
Fig. 11B shows a pickup device driving apparatus and a photographing apparatus according to another embodiment of the present invention.

### Best Mode for Carrying Out the Invention

Hereinafter, embodiments of the present invention will be described in detail with reference to the attached drawings.

### (Embodiment)

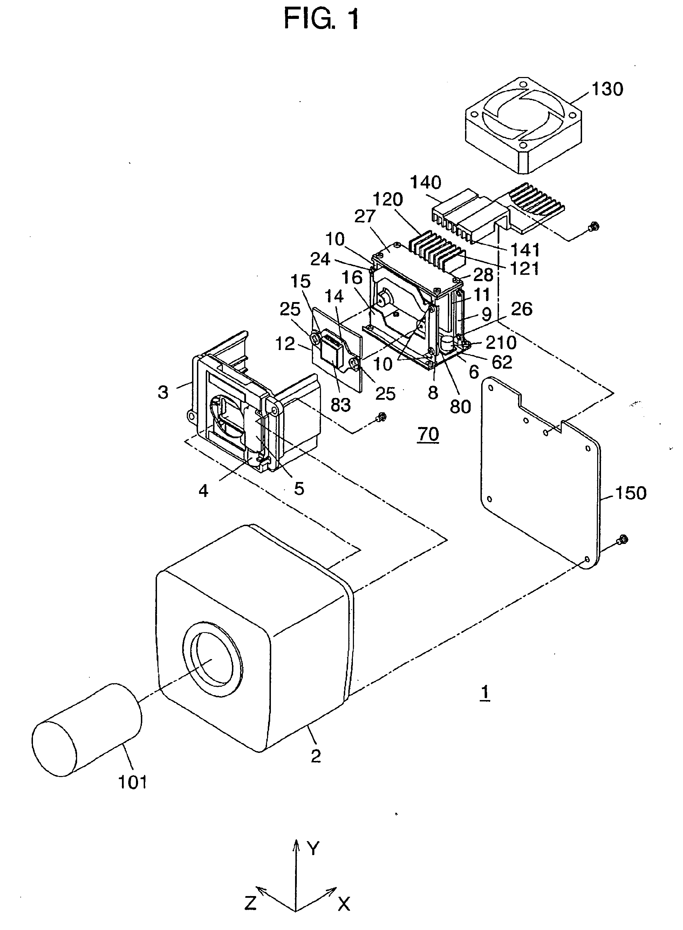

First, a configuration of photographing apparatus 1 according to an embodiment of the present invention will be described. Fig. 1 is an exploded perspective view showing a configuration of photographing apparatus 1 according to the embodiment of the present invention.

For simplification of description, in the embodiment of the present invention, an X axis direction, a Y axis direction, and a Z axis direction perpendicular to one another are shown in the drawings. The X axis direction is an optical axial direction of a lens part, and the Y axis and Z axis direction are perpendicular to the optical axis direction. In the embodiment of the present invention, for understanding of description, detailed parts such as screw or the like will be omitted in the drawings.

As shown in Fig. 1, photographing apparatus 1 according to the embodiment of the present invention includes lens mounting part 2 attached with lens part 101, base attaching part 3 for connecting base 6 of pickup device driving apparatus 70 to lens mounting part 2, DC motor part 4 which is disposed on base attaching part 3 and moves below-described filter part 5 in a direction (Y axis direction) perpendicular to the optical axis direction, filter part 5 which is attached to DC motor part 4 and has an infrared cut filter (not shown) which can be moved in the Y axis direction by driving DC motor part 4, pickup device driving apparatus 70 which is attached to base attaching part 3, has heat radiation part 120 including convex parts 121 having a fin shape which extends in the X axis direction, and can move pickup device (known pickup device such as CCD or CMOS sensor) 15 in a state that pickup surface 83 is perpendicular to the optical axial direction of lens part 101, heat sink part 140 which is provided such that convex parts 141 provided at one end thereof face concave parts between convex parts 121 of heat radiation part 120 of pickup device driving apparatus 70 and the other end having a comb-like fin is air-cooled by fan motor 130 which is a cooling means, and attaching member 150 attached with heat sink part 140 and fixed to lens mounting part 2. In addition, the photographing apparatus 1 according to the embodiment of the present invention includes an image signal processing part (not shown) for performing an image signal process on a signal output from pickup device 15.

The configuration and operation of pickup device driving apparatus 70 mounted on photographing apparatus 1 according to the embodiment of the present invention will be described.

In the embodiment of the present invention, heat radiation part 120 and heat sink part 140 were obtained by die-casting aluminum and coating black alumite on the surface thereof. Convex parts 121 and 141 which extend in the optical axial direction of lens part 101 and have a width of 1.0 mm and a height of 3.5 mm are provided on the surface facing heat sink part 140 of heat radiation part 120 (upper surface of Fig. 1) and the surface facing heat radiation part 120 of heat sink part 140.

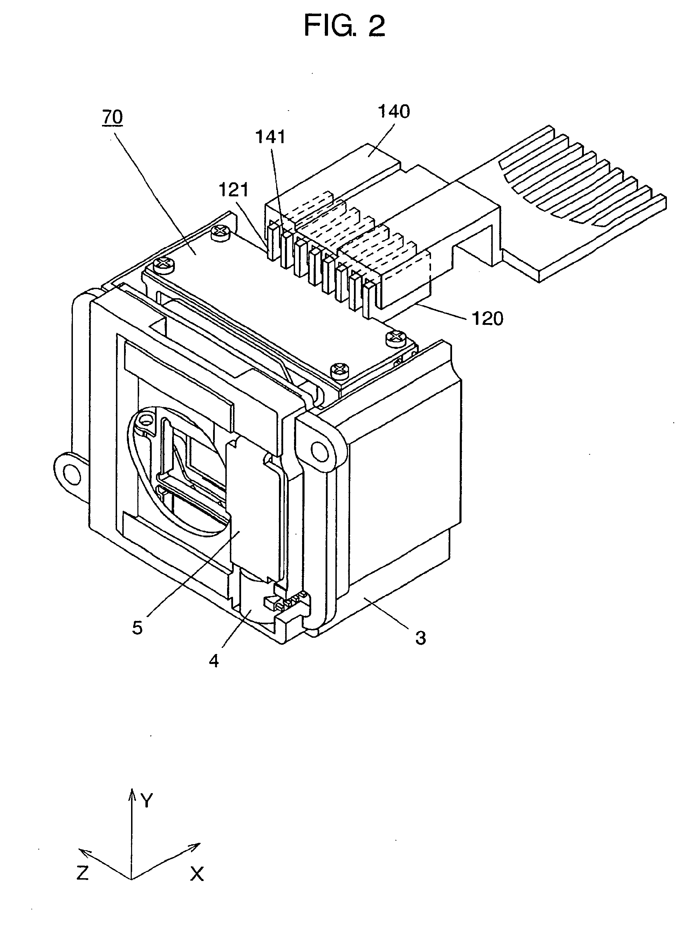

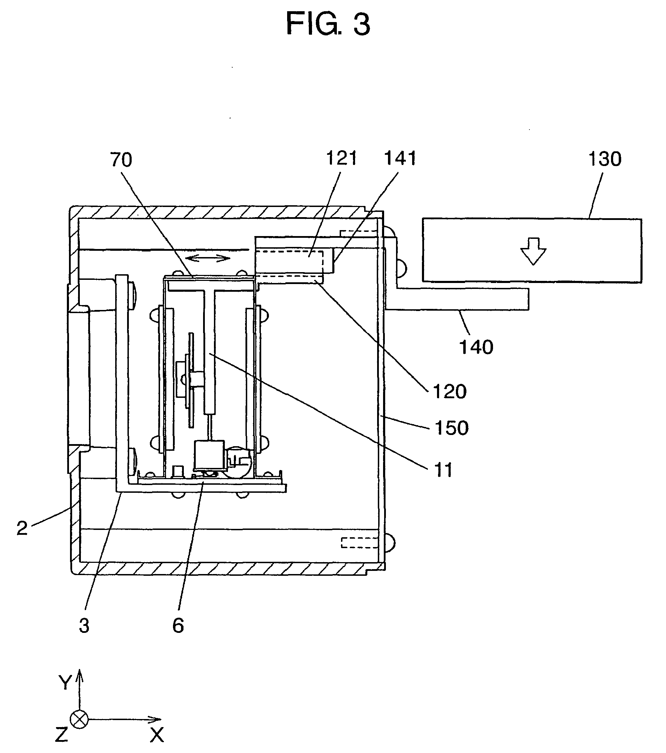

Fig. 2 shows a positional relationship among base attaching part 3, pickup device driving apparatus 70, and heat sink part 140 when photographing apparatus 1 according to the embodiment of the present invention is used. Fig. 3 is a cross-sectional view showing the positional relationship among base attaching part 3, pickup device driving apparatus 70, and heat sink part 140 in photographing apparatus 1 according to the embodiment of the present invention. As shown in Figs. 2 and 3, in photographing apparatus 1 according to the embodiment of the present invention, heat generated at pickup device 15 or peripheral driving circuit upon the usage is transferred to pickup device holding part 11 and heat radiation part 120. Thereafter, the heat is transferred to one end of heat sink part 140 by radiation of heat radiation part 120 through an air layer. At this time, in photographing apparatus 1 according to the embodiment of the present invention, since the other end of heat sink part 140 is cooled by fan motor 130, it is possible to suppress a temperature of pickup device 15 from rising. In photographing apparatus 1 according to the embodiment of the present invention, a comb-like fin is provided at the other end of heat sink part 140 in order to efficiently allow wind caused by fan motor 130 to flow at the other end or to improve radiation efficiency by increasing a contact area of heat sink part 140 for wind.

As shown in Fig. 2 or Fig. 3, in photographing apparatus 1 according to the embodiment of the present invention, heat radiation part 120 provided in pickup device driving apparatus 70 and heat sink part 140 attached to attaching member 150 fixed to lens mounting part 2 are provided such that convex parts 121 and 141 are alternately disposed, that is, irregularities provided in the surface of heat radiation part 120 and irregularities provided in surface of heat sink part 140 are engaged with each other while being spaced apart from each other. That is, convex parts 121 of heat radiation part 120 are disposed between convex part 141 of heat sink part 140 and convex parts 141 of heat sink part 140 are disposed between convex parts 121 of heat radiation part 120.

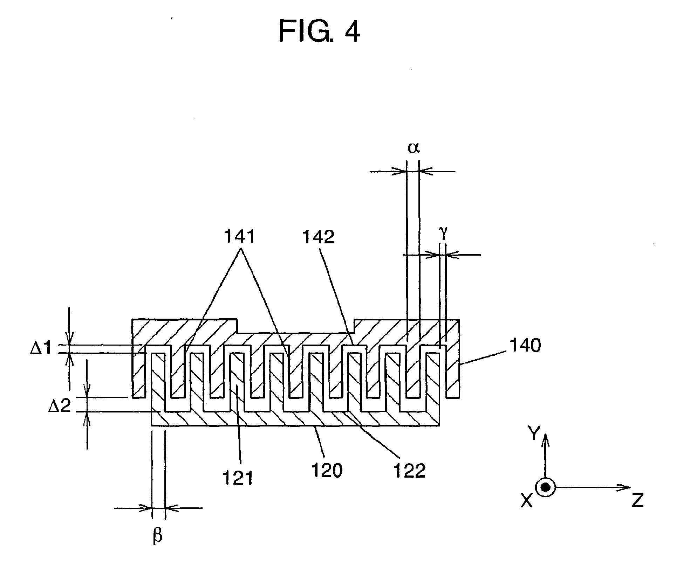

Fig. 4 shows a relationship between heat radiation part 120 and heat sink part 140 in photographing apparatus 1 according to the embodiment of the present invention. As shown in Fig. 4, a front end of convex part 121 of heat radiation part 120 is spaced apart from flat part 142 of heat sink part 140 at gap Δ1 of about 0.5 mm, interval γ between convex part 121 of heat radiation part 120 and convex part 141 of heat sink part 140 is about 0.5 mm, and a front end of convex part 141 of heat sink part 140 is spaced apart from flat part 122 of heat radiation part 120 at gap Δ2 of about 1.0 mm. As described above, width α of convex part 141 of heat sink part 140 is 1.0 mm and width β of convex part 121 of heat radiation part 120 is 1.0 mm.

As shown in Fig. 3, in photographing apparatus 1 according to a first embodiment of the present invention, since base part 6 of pickup device driving apparatus 70 is attached to base attaching part 3 and base attaching part 3 is threadably fixed to lens mounting part 2, heat radiation part 120 provided in pickup device driving apparatus 70 is positioned relative to lens mounting part 2. Since heat sink part 140 is attached to attaching member 150 and attaching member 150 is attached to lens mounting part 2, heat sink part 140 is also positioned relative to lens mounting part 2. Accordingly, in photographing apparatus 1 according to the embodiment of the present invention, the interval between heat radiation part 120 and heat sink part 140 can be accurately determined.

In order to confirm an effect that the temperature is suppressed from rising due to radiation of photographing apparatus 1 according to the embodiment of the present invention, three experiments were performed as follows:
(1) in a case where heat radiation part 120 was provided, heat sink part 140 was not provided, and heat in the vicinity of pickup device 15 was radiated into a case.
(2) in a case where heat radiation part 120 and heat sink part 140 were provided, and heat in the vicinity of pickup device 15 was radiated from heat radiation part 120 to heat sink part 140.
(3) in a case where heat radiation part 120 and heat sink part 140 were provided and the other end of heat sink part 140 is cooled by fan motor 130 such that heat in the vicinity of pickup device 15 is radiated,
maximum values of the temperature in the vicinity of pickup device 15 were measured in a state that a heating value of 452 mW is generated in the vicinity of pickup device 15.

As a result, in the case (1), the temperature rises by about 9.8 degrees at the rear surface of pickup device 15. In the case (2), the temperature rises by about 8.6 degrees. In case (3), the temperature rises by about 5.9 degrees.

That is, it can be seen that, by providing heat sink part 140, heat sink efficiency is improved by about 10% and, by cooling the other end of heat sink part 140 using fan motor 130, heat sink efficiency is improved by about 40%, compared with a configuration without heat sink part 140.

Photographing apparatus 1 according to the embodiment of the present invention is a monitoring camera apparatus which performs photographing while switching filter part 5 according to brightness of an environment day and night. In other words, in a bright environment, the infrared cut filter is disposed on the optical axis and color image photographing is performed in a visible area, and in a dark environment, the infrared cut filter disposed on the optical axis is removed and monochromic image photographing is performed by light beam of a wavelength including light beam in an infrared area. In photographing device 1, the brightness of the environment can be detected by comparing illumination intensity detected by illumination-intensity detecting part (not shown) mounted in a circuit part (not shown) with a predetermined threshold value. When the illumination intensity detected by the illumination-intensity detecting part is changed to exceed the threshold value, it is determined that transition from daytime to nighttime occurs. Thus, the circuit part switches filter part 5. In addition, the switch of filter part 5 can be performed by DC motor part 4 attached to base attaching part 3.

In photographing apparatus 1 according to the embodiment of the present invention, the switch of filter part 5 is performed when the illumination intensity is changed. At this time, since the infrared cut filter is disposed or detached (hereinafter, referred to as attached/detached) on the optical axis or the wavelength of the light beam used for photographing varies, the optical path length is changed and thus an optimal focusing position from lens part 101 to a surface (hereinafter, referred to as pickup surface 83) on which a photoelectric converting element is disposed in pickup device 15 is changed. In order to correct change in optical path length, in photographing device 1 according to the embodiment of the present invention, pickup device driving apparatus 70 for moving pickup device 15 in the optical axial direction (X axis direction) in a state that pickup surface 83 is held in a direction perpendicular to the optical axial direction of lens part 101 (that is, a state that pickup device 15 is located in a plane parallel to a YZ plane in Fig. 1) is mounted.

Now, pickup device driving apparatus 70 mounted on pickup device 1 according to the embodiment of the present invention will be described.

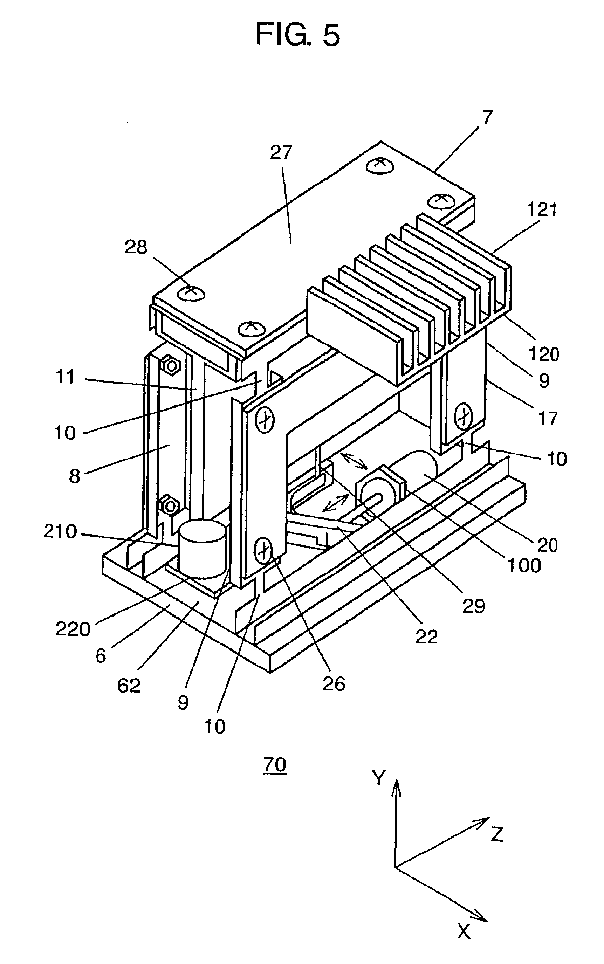

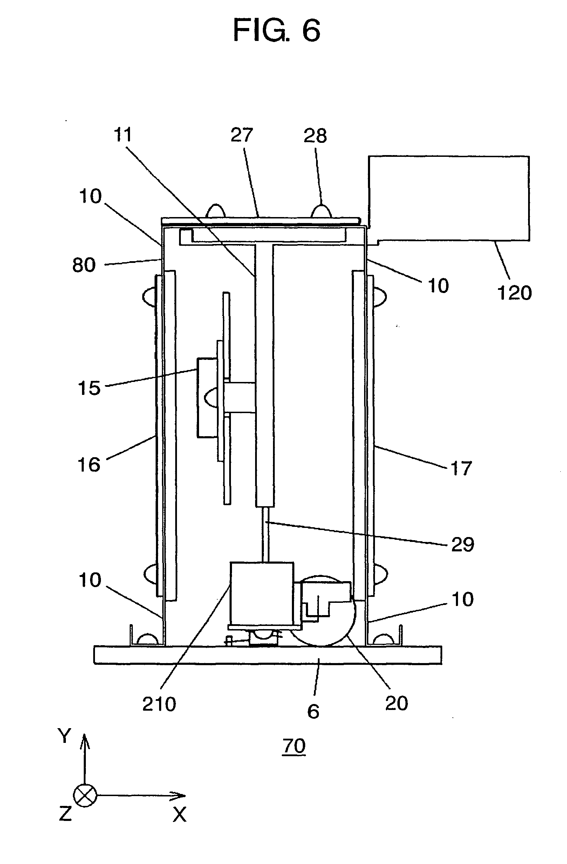

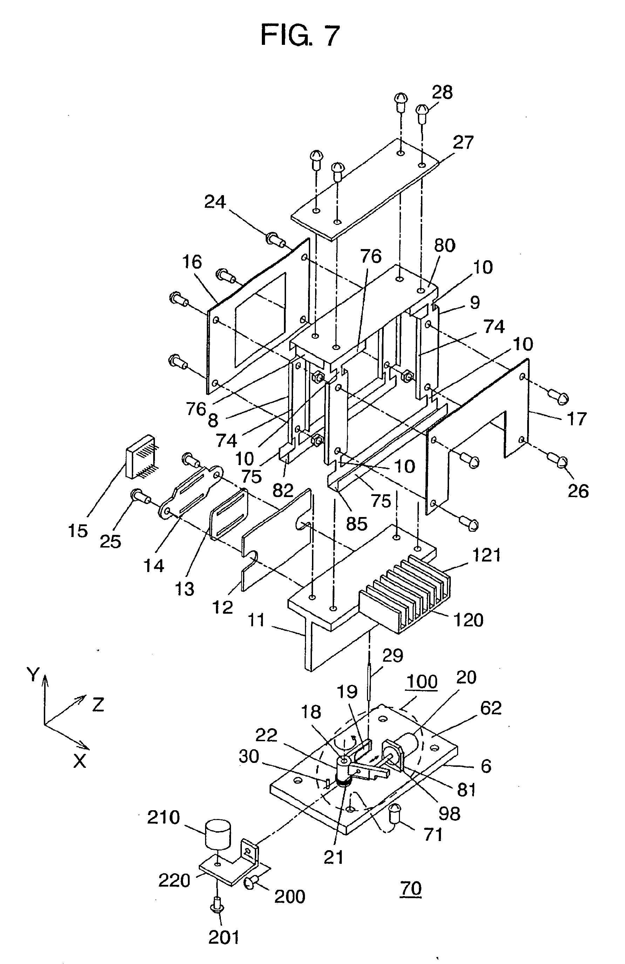

Fig. 5 is a perspective view of a configuration of pickup device driving apparatus 70 according to an embodiment of the present invention, Fig. 6 is a side view of the configuration of pickup device driving apparatus 70, and Fig. 7 is an exploded perspective view of pickup device driving apparatus 70 when viewed from the opposite side of lens part 101.

As shown in Figs. 5, 6, or 7, pickup device driving apparatus 70 according to the embodiment of the present invention includes base 6 which is attached to base attaching part 3 fixed to lens part 101 by screw 71, first support part 8 and second support part 9 which are mounted on base surface 62 of base 6 in parallel and have the same height in the Y axis direction, rectangular movable part 7 which is attached parallel to base surface 62 in a state that first support part 8 and second support part 9 are placed parallel to each other, leaf springs 10 which are provided between movable part 7 and first support part 8, between movable part 7 and second support part 9, between base 6 and first support part 8, and between base 6 and second support part 9, reinforcement plate 27 which is attached to the upper surface of movable part 7 by screw 28, first reinforcement plate 16 which is attached to first support part 8 by screw 24 and reinforces mechanical rigidity of first support part 8, second reinforcement plate 17 which is attached to second support part 9 by screw 26 and reinforces mechanical rigidity of second support part 9, pickup device holding part 11 which is attached to the surface (rear surface) opposite to the surface (front surface), on which reinforcement plate 27 of movable part 7 is mounted, by screw 28, attached with pickup device circuit part 12 having pickup device 15 through an insulating sheet 13 and a heat sink plate 14 by screw 25, and has above-described heat radiation part 120, pin 29 which is provided on the lower surface facing base surface 62 of pickup device holding part 11, actuator holding part 81 which is mounted on base surface 62, linear actuator 20 which is held by actuator holding part 81, driving direction changing part 22 which is pivotably supported by bearing part 18 (not shown) mounted on base surface 62 to be rotated in the Y axis direction, leaf spring 19 which is mounted in driving direction changing part 22 and slidably moved while inserting pin 29 between driving direction changing part 22 and leaf spring 19, coil spring 21 which provides an elastic force in the opposite direction of a bias force applied from linear actuator 20 to driving direction changing part 22, spring fixing part 30 for holding coil spring 21, and balance member 220 which is threadably fixed to driving direction changing part 22 by screw 200 and attached with weight 210 by screw 201 in order to hold balance with heat radiation part 120 provided in pickup device holding part 11.

As shown in Fig. 5, 6, or 7, in pickup device driving apparatus 70 according to the embodiment of the present invention, movable part 7, first support part 8, second support part 9, and leaf springs 10 are formed by U-shaped integral member 80 which is subjected to a bending process in a U shape. As a material of U-shaped member 80, a material having relatively low rigidity such as a SUS material having a thickness of 0.12 mm can be used.

Base attaching part 3, base 6, and pickup device holding part 11 may be prepared by a die casting method using aluminum.

As a material of reinforcement plate 27, first reinforcement plate 16, and second reinforcement plate 17, a material having relatively high rigidity such as a SUS material having a thickness of 0.5 mm can be used in order to reinforce the mechanical strength of U-shaped member 80.

In pickup device driving apparatus 70 according to the embodiment of the present invention, first support part 8, second support part 9, movable part 7, and leaf springs 10 are formed by U-shaped integral member 80. First reinforcement plate 16 and second reinforcement 17 are attached to portions of first support part 8 and second support part 9, respectively. Bent parts 74 are provided at the sides of first support part 8 and second support part 9. Thus, rigidity of first support part 8 and second support part 9 is higher than that of leaf springs 10.

Bent parts 76 are also provided at portions of movable part 7 of U-shaped member 80, and reinforcement plate 27 is attached to movable part 7. Thus, rigidity of movable part 7 is higher than that of leaf springs 10.

Bent parts 75 are provided at the ends of attachment surfaces 82 and 85 to be attached to base surface 62 of U-shaped member 80. Thus, rigidity of this portion can increase.

Since portions between movable part 7 of U-shaped member 80 and first support part 8 and second support part 9 are not subjected to a reinforcement process such as a bending process and have widths narrower than those of the other portions, these portions function as leaf springs 10.

Similarly, since portions between attachment surfaces 82 and 85 of U-shaped member 80 and first support part 8 and second support part 9 are not subjected to a reinforcement process such as a bending process and have widths narrower than those of the other portions, these portions also function as leaf springs 10.

In pickup device driving apparatus 70 according to the embodiment of the present invention, attachment surface 82 in which first support part 8 is in contact with base surface 62 and attachment surface 85 in which second support part 9 is in contact with base surface 62 are attached to base surface 62 by screw 71 to be parallel to the Z axis direction perpendicular to the optical axial direction (X axis direction).

Now, a configuration of driving part 100 of pickup device driving apparatus 70 according to the embodiment of the present invention will be described in detail.

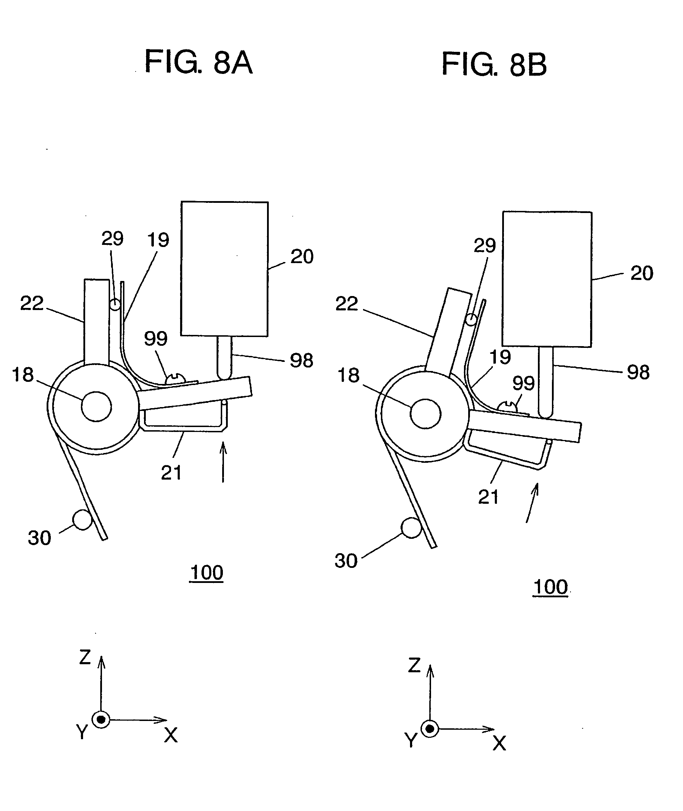

Figs. 8A and 8B are plan views showing a configuration of driving part 100 in pickup device driving apparatus 70 according to the embodiment of the present invention. In Figs. 8A and 8B, balance member 220 having weight 210 included in pickup device driving apparatus 70 of photographing apparatus 1 according to the embodiment of the present invention is omitted.

As shown in Fig. 8A, in pickup device driving apparatus 70 according to the embodiment of the present invention, linear actuator 20 presses driving direction changing part 22 in a lower direction (-Z axis direction) of the drawing by axis 98 which can be moved in an upper direction (Z axis direction) of the drawing. Coil spring 21 for applying an elastic bias force in the opposite direction of the bias force of linear actuator 20 is mounted on driving direction changing part 22. One end of coil spring 21 is fixed by spring fixing part 30. In a state shown in Fig. 8A, the bias force of linear actuator 20 and the bias force of coil spring 21 are in balance and driving direction changing part 22 is in a stop state. In addition, leaf spring 19 is attached to driving direction changing part 22 by screw 99 such that pin 29 of pickup device holding part 11 is inserted between driving direction changing part 22 and leaf spring 19. Pin 29 slides between driving direction changing part 22 and leaf spring 19 by changing the press force of linear actuator 20.

Fig. 8B shows a state of driving part 100 when the press force of linear actuator 20 increases, in pickup device driving apparatus 70 according to the embodiment of the present invention.

As shown in Fig. 8B, when the press force of linear actuator 20 increases in a state shown in Fig. 8A, that is, when axis 98 extends in a lower direction (-Z axis direction) of the drawing, axis 98 presses driving direction changing part 22 and driving direction changing part 22 rotates on bearing part 18 in a clockwise direction. Thus, pin 29 is moved in a right direction (X axis direction) of the drawing.

Accordingly, in pickup device driving apparatus 70 according to the embodiment of the present invention, since driving direction changing part 22 for changing an output direction of linear actuator 20 is included in driving part 100, linear actuator 20 need not be the optical axial direction (X axis direction). Accordingly, linear actuator 20 may be arranged in a direction (Z axis direction) perpendicular to the optical axial direction and thus miniaturization of the apparatus can be realized. When the miniaturization is not required, pin 29 may be directly pressed and moved by linear actuator 20 in the optical axial direction (X axis direction) without using driving direction changing part 22.

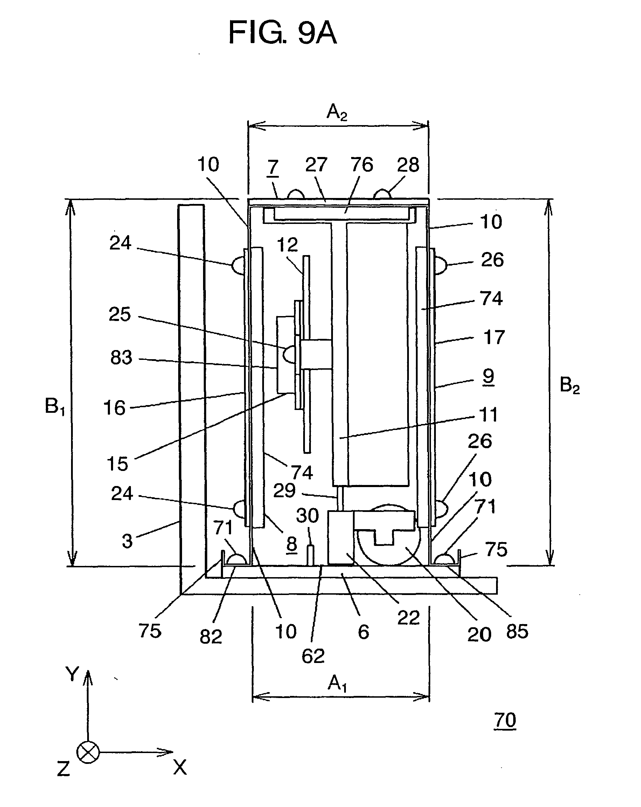

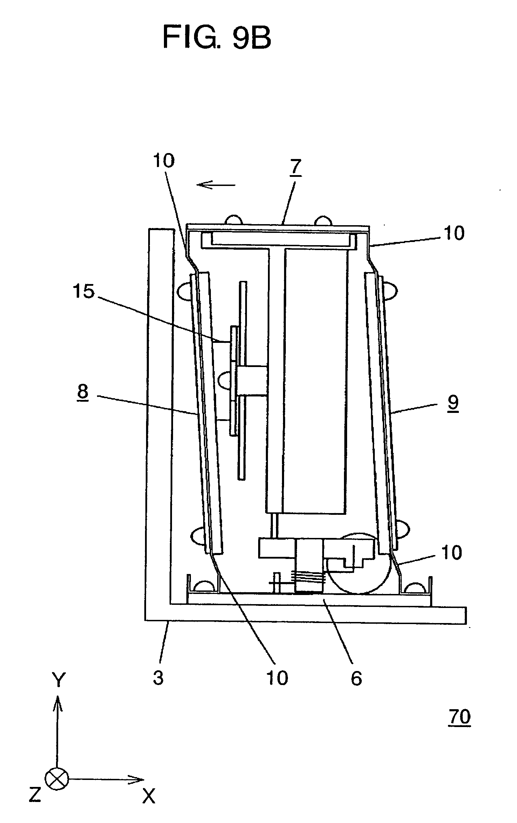

Now, an operation of pickup device driving apparatus 70 according to the embodiment of the present invention will be described in detail with reference to Figs. 9A to 9B. Figs. 9A and 9B are views explaining the operation of pickup device driving apparatus 70 according to the embodiment of the present invention. Even in Figs. 9A and 9B, balance member 220 having weight 210 included in pickup device driving apparatus 70 of pickup device 1 according to the embodiment of the present invention is omitted.

Fig. 9A is a side view showing an example of the operation of pickup device driving apparatus 70 according to the embodiment of the present invention, and Fig. 9B is a side view showing an example when the position of pickup device 15 is changed.

In Fig. 9A, first support part 8 and second support part 9 of pickup device driving apparatus 70 are perpendicular to base surface 62. Distance A₁ between first support part 8 and second support part 9 on base surface 62 is equal to distance A₂ between first support part 8 and second support part 9 at a connection portion with movable part 7 in the optical axial direction (X axis direction). Since height B₁ from base surface 62 of first support part 8 to movable part 7 is equal to height B₂ from base surface 62 of second support part 9 to movable part 7, movable part 7 is held parallel to base surface 62. Since base surface 62 is placed parallel to the optical axial direction (X axis direction) of lens part 101, movable part 7 is also parallel to the optical axial direction of lens part 101.

In pickup device driving apparatus 70 according to the embodiment of the present invention, pickup device holding part 11 including pickup device circuit part 12 having pickup device 15 is disposed on the lower surface of movable part 7. At this time, by attaching pickup surface 83 of pickup device 15 to pickup device holding part 11 to be perpendicular to the surface of movable part 7 of pickup device holding part 11, the pickup surface 83 of pickup device 15 is held perpendicular to the optical axial direction.

In a state shown in Fig. 9A, a force that the axis 98 of linear actuator 20 presses driving direction changing part 22 and a force that coil spring 21 presses driving direction changing part 22 in the opposite direction thereof by the elastic force are in balance and pin 29 provided on driving direction changing part 22 is in a stop state, as described in Fig. 8A. From this state, linear actuator 20 is operated to reduce a bias force applied to driving direction changing part 22. Then, the force that the coil spring 21 presses driving direction changing part 22 becomes larger than the press force that linear actuator 20 presses driving direction changing part 22, driving direction changing part 22 rotates on bearing part 18 , and pin 29 provided on the front end thereof is moved to the left side of Fig. 9A. By this movement, pickup device holding part 11 is moved in a left direction (-X axis direction) of the drawing, as shown in Fig. 9B. Since pickup device holding part 11 is moved in the left direction of the drawing, leaf springs 10 provided between movable part 7 and first support part 8, between movable part 7 and second support part 9, between base surface 62 and first support part 8, and between base surface 62 and second support part 9 are elastically deformed. Accordingly, in pickup device driving apparatus 70 according to the embodiment of the present invention, first support part 8 and second support part 9 rotate on leaf springs 10, that is, rotate in directions perpendicular to the optical axial direction and parallel to each other (Z axis direction in Figs. 9A and 9B). Thus, first support part 8 and second support part 9 rotate with respect to base 6 and movable part 7.

In other words, when pickup device 15 is moved from a state of Fig. 9A to a state of Fig. 9B, since height B₁ of first support part 8 and height B₂ of second support part 9 are equal to each other and distance A₂ between first support part 8 and second support part 9 at the connection portion with movable part 7 and distance A₁ between first support part 8 and second support part 9 on base surface 62 are equal to each other as described above, movable part 7, first support part 8, second support part 9, and base surface 62 are deformed to form a substantial parallelogram. Accordingly, in pickup device driving apparatus 70 according to the embodiment of the present invention, the position of pickup device 15 can be moved in the optical axial direction while movable part 7 is held parallel to base surface 62. At this time, pickup device 15 is moved in a state that pickup surface 83 of pickup device 15 placed perpendicular to movable part 7 is held perpendicular to the optical axial direction.

In pickup device driving apparatus 70 according to the embodiment of the present invention, contrary to the above, in order to move pickup device 15 to be apart from lens part 101, by increasing the press force of linear actuator 20, the bias force applied to driving direction changing part 22 becomes stronger. Then, as shown in Fig. 8B, the bias force that coil spring 21 biases driving direction changing part 22 becomes larger than the bias force that linear actuator 20 biases driving direction changing part 22, driving direction changing part 22 rotates on bearing part 18 in a direction (clockwise direction) opposite to the above, and pin 29 provided on the front end thereof is also moved to the right side of Fig. 9A. Pickup device holding part 11 is moved in the right direction (X axis direction) by movement of pin 29.

In pickup device driving apparatus 70 according to the embodiment of the present invention, since movable part 7 is supported by first support part 8 and second support part 9 which have the same height from base surface 62, are parallel to each other, and rotate in the optical axial direction, movable part 7 can be moved in the optical axial direction while being always held parallel to base surface 62. Since pickup device holding part 11 is attached such that pickup surface 83 of pickup device 15 is disposed in the direction perpendicular the movable part 7, pickup device 15 can be moved in the optical axial direction while pickup surface 83 thereof is held perpendicular to the optical axial direction and pickup device 15 can be moved with high precision.

In pickup device driving apparatus 70 according to the embodiment of the present invention, mechanisms for moving pickup device 15 in the optical axial direction, that is, mechanisms including attachment surface 82 which is in contact with base surface 62, first support part 8, movable part 7, second support part 9, attachment surface 85, and leaf springs 10, can be prepared by performing processes including punching and molding on an integral plate material. Accordingly, friction or saccadic movement is extremely low and thus driving can be performed with high precision even when slight driving is performed.

Now, balance member 220 having weight 210 included in pickup device driving apparatus 70 of photographing apparatus 1 according to the embodiment of the present invention will be described in detail.

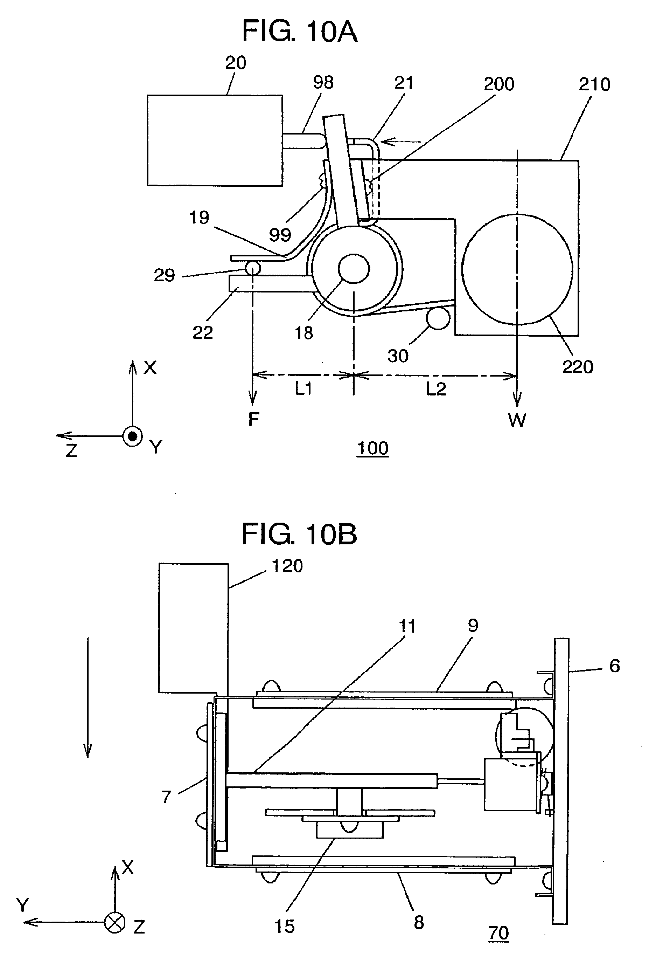

Figs. 10A and 10B are views explaining balance member 220 mounted on pickup device driving apparatus 70 of photographing apparatus 1 according to the embodiment of the present invention. Fig. 10A is a plan view showing configurations in the vicinity of balance member 220. In pickup device driving apparatus 70 according to the embodiment of the present invention, balance member 220 is provided in order to reduce a load applied to linear actuator 20 when lens part 101 of pickup device 1 is disposed at the lower side as shown in Fig. 10B.

That is, in the state shown in Fig. 10B, in the vicinity of driving part 100, downward moment F is generated due to a weight of heat radiation part 120 and pickup device holding part 11 in the left side of bearing part 18 of driving direction changing part 22, as shown in Fig 10A. Since this moment F rotates driving direction changing part 22 in a counterclockwise direction in Fig. 10A, driving direction changing part 22 cannot rotate in a clockwise direction in the same torque as torque applied to linear actuator 20 when photographing apparatus 1 is placed on the horizontal plane of earth. To this end, in photographing apparatus 1 according to the embodiment of the present invention, balance member 220 having weight 210 is provided at the opposite side of pin 29 centering on bearing part 18 of driving direction changing part 22. By this configuration, as shown in Fig. 10A, since a downward force, that is, moment W for rotating driving direction changing part 22 in the clockwise direction can be generated by weight 210, linear actuator 20 rotates driving direction changing part 22 with the same torque as when photographing apparatus 1 is placed on the plane. The length of an arm of driving direction changing part 22 or the position and the weight of weight 210 is preferably determined such that moment F and moment W are in balance.

In photographing apparatus 1 according to the embodiment of the present invention, weight increase W1 of heat radiation part 120 is 2.5 g and weight W2 of weight 210 is 1.67 g. Distance L1 from the center of bearing part 18 to pin 29 is 11.0 mm and distance L2 from the center of bearing part 18 to the center of weight 210 is 16.5 mm. W1xL1=W2xL2 is preferably satisfied such that moment F and moment W are in balance.

Although, in the above-described example, the description is given photographing apparatus 1 is disposed such that lens part 101 is disposed at the lower side, photographing apparatus 1 may be advantageously disposed such that lens part 101 is disposed at the upper side in photographing apparatus 1 according to the embodiment of the present invention. This is because moment F and moment W are in balance even when the directions thereof are in the opposite directions.

In photographing apparatus 1 according to the embodiment of the present invention, since weight 210 for adjusting balance is provided, it is possible to realize a configuration in which a load is hard to be applied to linear actuator 20 although lens part 101 is provided in any one of the upper and lower sides in photographing apparatus 1.

Although, in pickup device driving apparatus 70 according to the embodiment of the present invention, leaf springs 10 are formed between movable part 7 and first support part 8, between movable part 7 and second support part 9, between base surface 62 and first support part 8, and between base surface 62 and second support part 9, pickup device driving apparatus according to the present invention is not limited to this configuration.

For example, movable part 7, first support part 8, second support part 9, and base part 6 may be separately provided and a hinge part may be formed between movable part 7 and first support part 8, between movable part 7 and second support part 9, between base surface 62 and first support part 8, and between base surface 62 and second support part 9. According to this configuration, it is possible to realize a configuration with excellent impact resistance in addition to the above-described effect. In such a configuration, an elastic means such as a coil spring for elastically connecting first support part 8 to second support part 9 is preferably provided in order to suppress saccadic movement in the hinge part.

Although, in photographing apparatus 1 according to the embodiment of the present invention, the center position of pickup surface 83 of pickup device 15 is changed in a vertical direction (Y axis direction) of the optical axial direction with the movement of pickup device 15 in the optical axial direction (X axis direction). However, the displacement of pickup device 15 in the direction (Y axis direction) perpendicular to the optical axial direction can be removed in practice by providing a circuit for detecting the displacement thereof using a photo-interrupter or the like, calculating the displacement of pickup device 15 in the direction (Y axis direction) perpendicular to the optical axial direction, and shifting a read area of a signal depending on the displacement to perform correction in the circuit part. When the displacement of pickup device 15 in the optical axial direction (X axis direction) is small, a problem is not caused in practice although the above-described correction process is not performed.

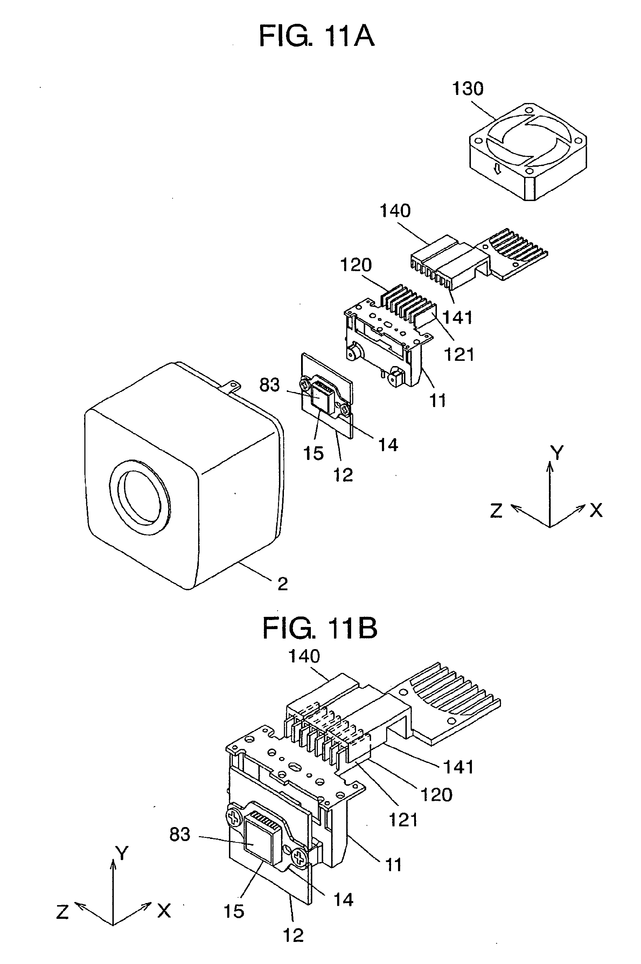

Although, in the embodiment of the present invention, the structure for changing pickup device driving apparatus 70 mounted on photographing device 1 using the rectangular U-shaped member 80 and moving pickup device 15 mounted on pickup device driving apparatus 70 in the optical axial direction in parallel is described, the pickup device driving apparatus and the photographing apparatus according to the present invention is not limited to this embodiment. Figs. 11A and 11B show a pickup device driving apparatus and a photographing apparatus according to another embodiment of the present invention. Fig. 11A is an exploded perspective view and Fig. 11B is a perspective view in a state that assembling is completed. As shown in Fig. 11A, when pickup device holding part 11 attached with pickup device 15 is held by any mechanism to be moved in the optical axial direction of lens part 101, heat radiation part 120 having convex parts 121 for allowing heat in the vicinity of pickup device to escape by radiation is provided in pickup device holding part 11, heat sink part 140 having convex parts 141 facing convex parts 121 of heat radiation part 120 is provided in a case side, the heat is allowed to escape by radiation, similar to the above-described embodiment. At this time, the pickup device driving apparatus according to the present invention is applicable to various mechanisms for moving pickup device holding part 11 in the optical axial direction in a state that pickup surface 83 of pickup device 15 is perpendicular to the optical axial direction of lens part 101. For example, as disclosed in Japanese Unexamined Publication No. 2003-274229, the pickup device driving apparatus according to the present invention is applicable to a structure for rotating a lead screw and moving a chassis having a pickup device supported by a guide rod. The pickup device driving apparatus according to the present invention is applicable to a structure in which a mechanism for moving pickup device holding part 11 in the optical axial direction of lens part 101 automatically pickup device holding part 11 moves using a driving means such as a motor or a structure for manually moving pickup device holding part 11 using a knob.

Although, in the embodiment of the present invention, fan motor 130 is employed as a cooling part for cooling the other end of heat sink part 140, the pickup device driving apparatus and the photographing apparatus according to the present invention is not limited to this configuration. For example, a known cooling device such as a Peltier device or a liquid cooling mechanism may be used as the cooling part.

Although, examples of mounting the pickup device driving apparatus according to the embodiments of the present invention on the monitoring camera apparatus are described, the use of the photographing apparatus according to the present invention is not limited to the monitoring camera apparatus. For example, the pickup device driving apparatus may be mounted on every known photographing apparatus such as a video camera or a digital camera.

### Industrial Applicability

As described above, according to a pickup device driving apparatus and a photographing apparatus using the same according to the present invention, even when a pickup device is moved in an optical axial direction, it is possible to allow heat in the vicinity of the pickup device to escape without generating a frictional force. The present invention is applicable to a photographing apparatus such as a monitoring camera apparatus or a video camera apparatus, and more particularly, to a pickup device driving apparatus for moving a pickup device in an optical axial direction of a lens part and a photographing apparatus using the same.

### <Reference Numerals>

- 1:: photographing device
- 2:: lens mounting part
- 3:: base attaching part
- 4:: DC motor part
- 5:: filter part
- 6:: base
- 7:: movable part
- 8:: first support part
- 9:: second support part
- 10:: leaf spring
- 11:: pickup device holding part
- 12:: pickup device circuit part
- 13:: insulating sheet
- 14:: heat sink plate
- 15:: pickup device
- 16:: first reinforcement plate
- 17:: second reinforcement plate
- 18:: bearing part
- 19:: leaf spring
- 20:: linear actuator
- 21:: coil spring
- 22:: driving direction changing part
- 24, 25, 26, 28, 71, 99, 200, 201:: screw
- 27:: reinforcement plate
- 29:: pin
- 30:: spring fixing part
- 62:: base surface
- 70:: pickup device driving apparatus
- 74, 75, 76:: bent part
- 80:: U-shaped member
- 81:: actuator holding part
- 82, 85:: attachment surface
- 83:: pickup surface
- 98:: axis
- 100:: driving part
- 101:: lens part
- 120:: heat radiation part
- 121: 141:: convex part
- 122, 142:: flat part
- 130:: fan motor
- 140:: heat sink part
- 150:: attaching member
- 210:: weight
- 220:: balance member

## Claims

1. A pickup device driving apparatus comprising:
a movable part having a pickup device and capable of moving the pickup device while a direction of a pickup surface is held; and
a heat radiation part which is provided in the movable part and allows heat in the vicinity of the pickup device to escape by radiation.

2. The pickup device driving apparatus of Claim 1, wherein the heat radiation part is provided to face a heat sink part provided in a case.

3. The pickup device driving apparatus of Claim 2, wherein convex parts are provided on a surface of the heat radiation part facing the heat sink part.

4. The pickup device driving apparatus of Claim 3, wherein the convex parts of the heat radiation part are provided to face concave parts of irregularities provided in the heat sink part.

5. The pickup device driving apparatus of Claim 3, wherein the convex parts of the heat radiation part have fin which extend in a movement direction of the pickup device.

6. The pickup device driving apparatus of Claim 2, wherein the heat radiation part is not in contact with the heat sink part within a movement range of the pickup device.

7. A photographing apparatus comprising:
a lens part;
a case;
the pickup device driving apparatus of Claim 1; and
an image signal processing part which performs an image signal process on a signal output from the pickup device of the pickup device driving apparatus.

8. The photographing apparatus of Claim 7, further comprising a cooling part which cools the heat sink part.

9. The photographing apparatus of Claim 8, wherein the cooling part is a fan motor.

10. A monitoring camera apparatus comprising:
the photographing apparatus of Claim 7;
an illumination-intensity change detecting part which detects change in illumination intensity;
a filter part which attaches and detaches an infrared cut filter on an optical axis of the lens part depending on the change in illumination intensity detected by the illumination-intensity change detecting part; and
a control part which drives the movable part of the pickup device driving apparatus when the infrared cut filter of the filter part is attached and detached.
